# NEUE EUROPÄISCHE PATENTSCHRIFT

(11) **EP 2 223 724 B2**
(45) Veröffentlichungstag und Bekanntmachung des Hinweises auf die Entscheidung über den Einspruch: **11.10.2017**
(45) Hinweis auf die Patenterteilung: 23.07.2014
(21) Anmeldenummer: 10151291.1
(22) Anmeldetag: 21.01.2010
(51) Int. Cl.: B01D 29/11

(54) **Hydraulikfilterelement und zugehöriges Hertellungsverfahren**
Hydraulic filter element and associated manufacturing method
Elément de filtre hydraulique et procédé de fabrication correspondant

(30) Priorität: 23.01.2009 DE 102009005980
(43) Veröffentlichungstag der Anmeldung: 01.09.2010
(73) Patentinhaber: Mahle Industriefiltration GmbH, 74613 Öhringen (DE)
(72) Erfinder: Oschinsky, Ursula, 74613, Öhringen (DE); Schick, Albert, 74336, Brackenheim (DE); Steiner, Gerhard, 74629, Pfedelbach-Unterhöfen (DE); Wierling, Reinhard, 74629, Pfedelbach (DE)
(74) Vertreter: BRP Renaud & Partner mbB Rechtsanwälte Patentanwälte Steuerberater

(56) Entgegenhaltungen:
- WO-A1-00/45932
- WO-A1-96/33001
- DE-A1- 3 729 955
- DE-A1- 10 212 920
- DE-U1- 7 734 224
- DE-U1-202005 001 693
- GB-A- 2 194 902
- US-A- 3 376 979
- US-A- 5 814 219

## Beschreibung

Die vorliegende Erfindung betrifft ein Hydraulikfilterelement, insbesondere ein Ölfilterelement, mit den Merkmalen des Oberbegriffs des Anspruchs 1. Die Erfindung betrifft außerdem ein Verfahren zum Herstellen eines derartigen Hydraulikfilterelements.

Hydraulikfilterelemente besitzen üblicherweise einen zylindrischen Filterkörper, der aus einem sternförmig gefalteten Filtermaterial hergestellt ist. Aufgrund der im Einsatz auftretenden großen Druckunterschiede zwischen einer außenliegenden Rohseite und einer innenliegenden Reinseite kann ein derartiges Hydraulikfilterelement außerdem mit einer zylindrischen Innenzarge ausgestattet sein, an der sich der Filterkörper radial innen abstützen kann. Ferner können axiale Endscheiben vorgesehen sein, die an gegenüberliegenden axialen Enden des Filterkörpers angeordnet sind.

Bei der Herstellung derartiger Hydraulikfilterelemente wird die Innenzarge in das gefaltete Filtermaterial eingesteckt und das Filtermaterial wird mit Hilfe von Spannelementen, wie Bänder, Schnüren und dergleichen, gegen die Innenzarge vorgespannt. In diesem vorgespannten Zustand werden die Endscheiben angebracht, um die Relativlage zwischen Filtermaterial und Innenzarge zu fixieren. Nach dem Anbringen der Endscheiben sind die vorgenannten Spannelemente wieder zu entfernen. Das Anbringen und Entfernen derartiger Spannelemente erfordert vergleichsweise zeitintensive und relativ kostenintensive Herstellungsschritte. Ferner sind diese Schritte mit relativ hoher Sorgfalt durchzuführen, um die gewünschte Kontaktierung zwischen Filtermaterial und Innenzarge zu erhalten, was zur Erzielung der erforderlichen Lebensdauer für das Hydraulikfilterelement von erhöhter Bedeutung ist.

Aus der WO 96/33001 A1 ist ein Hydraulikfilterelement bekannt, das einen zylindrischen Filterkörper aus einem sternförmig gefalteten Filtermaterial und eine zylindrischen Innenzarge aufweist, an der sich der Filterkörper radial innen abstützt. Das bekannte Hydraulikfilterelement ist außerdem mit einer für das jeweilige Hydraulikmittel durchlässigen, zylindrischen Hülle ausgestattet, die radial außen am Filterkörper anliegt, die aus einem Schrumpfmaterial besteht und die auf den Filterkörper aufgeschrumpft ist.

Andere Hydraulikfilterelemente, bei denen der Filterkörper mit einer für das jeweilge Hydraulikmittel durchlässigen Hülle versehen ist, sind aus der US 3 376 979 A und der WO 00/45932 A1 bekannt.

Die vorliegende Erfindung beschäftigt sich mit dem Problem, für ein Hydraulikfilterelement bzw. für ein zugehöriges Herstellungsverfahren eine verbesserte Ausführungsform anzugeben, die sich insbesondere dadurch charakterisiert, dass sie vergleichsweise preiswert realisierbar ist, eine hohe Reproduzierbarkeit besitzt und vorzugsweise eine lange Standzeit für das Hydraulikfilterelement unterstützt.

Dieses Problem wird erfindungsgemäß durch die Gegenstände der unabhängigen Ansprüche gelöst. Vorteilhafte Ausführungsformen sind Gegenstand der abhängigen Ansprüche.

Die vorliegende Erfindung beruht auf dem allgemeinen Gedanken, das Filterelement mit einer zylindrischen Hülle auszustatten, die außen am Filterkörper angeordnet ist und die für das jeweilige Hydraulikmittel durchlässig ist. Diese Hülle kann im Rahmen der Herstellung des Filterelements dazu verwendet werden, das Filtermaterial gegen die Innenzarge vorzuspannen bzw. daran anzudrücken. Der besondere Vorteil der Hülle ist, dass sie nach der Herstellung des Filterelements daran verbleiben kann, da sie für das jeweilige Hydraulikfluid durchlässig ist.

Hierdurch reduziert sich der Aufwand bei der Herstellung des Filterelements. Ferner kann sich eine derartige Hülle in der Axialrichtung über die gesamte Länge oder Höhe des Filterkörpers erstrecken, was die Vorspannung des Filtermaterials gegen die Innenzarge verbessert und insbesondere gleichmäßig und mit höherer Zuverlässigkeit erzeugen lässt. Darüber hinaus besitzt das mit der Hülle ausgestattete Filterelement eine verbesserte Funktionalität, da die Hülle als Vorfilter oder Grobschmutzfilter arbeiten kann, was zum Beispiel eine Beschädigung oder Beeinträchtigung des Filtermaterials durch grobkörnige Verunreinigungen verhindert oder zumindest behindert. Insofern wirkt sich die Hülle bereits positiv auf die Standzeit des Filterelements aus. Die erhöhte Zuverlässigkeit und Verbesserung des Andrückens des Filtermaterials gegen die Innenzarge während der Herstellung des Filterelements führt zu qualitativ hochwertigen Filterelementen, die sich durch eine vergleichsweise hohe Standzeit auszeichnen.

Vorzugsweise liegt die Hülle unter Vorspannung am Filterkörper an. Diese Vorspannung ist auf die Vorspannwirkung der Hülle zurückzuführen, mit der die Hülle im Rahmen der Herstellung des Filterelements das Filtermaterial gegen die Innenzarge andrückt. Besonders vorteilhaft ist dabei eine Ausführungsform, bei welcher die Hülle das Filtermaterial spielfrei gegen die Innenzarge andrückt. Hierdurch ergibt sich eine exakt definierte Relativlage zwischen Filtermaterial und Innenzarge bereits während der Herstellung des Filterelements, was zu einer besonders hohen Standzeit für das Filterelement führt.

Die Hülle kann aus einem perforierten oder gelochten Hüllenmaterial bestehen, wobei das Hüllenmaterial selbst für das jeweilige Hydraulikmittel undurchlässig sein kann. Alternativ kann die Hülle aus einem Vliesmaterial bestehen, das für das Hydraulikmittel durchlässig ist. Vliesmaterialien kommen im Filterbau beispielsweise zum Herstellen von Filtermaterial zum Einsatz.

Erfindungsgemäß besteht die Hülle aus einem Schrumpfmaterial. Ein Schrumpfmaterial charakterisiert sich dadurch, dass es bei bestimmten Randbedingungen, insbesondere bei einer thermischen Behandlung, hinsichtlich seiner Abmessungen schrumpft. Die Verwendung einer Hülle aus einem Schrumpfmaterial ermöglicht im Rahmen der Herstellung des Filterelements ein Aufschrumpfen der Hülle auf den Filterkörper und damit gleichzeitig ein Aufschrumpfen des Filtermaterials auf die Innenzarge. Das bedeutet, dass durch das Schrumpfen der Hülle das Filtermaterial soweit zusammengedrückt wird, dass es an der Innenzarge zur Anlage kommt, wobei insbesondere sämtliches Radialspiel zwischen Filtermaterial und Innenzarge eliminiert werden kann. Die Verwendung eines Schrumpfmaterials für die Hülle vereinfacht somit die Herstellung des Filterelements und führt zu einer extrem hohen Reproduzierbarkeit bei gleichzeitig hoher Fertigungsqualität. Erfindungsgemäß ist das Schrumpfmaterial so ausgestaltet, dass es in der Umfangsrichtung einen größeren Schrumpf aufweist als in der Axialrichtung. Hierdurch kann eine relativ hohe radiale Vorpannung zwischen Hülle und Filterkörper erzeugt werden, während gleichzeitig eine ausreichende axiale Überdeckung des Filterkörpers durch die Hülle erreicht wird.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Es zeigen, jeweils schematisch
- Fig. 1: einen stark vereinfachten prinzipiellen Längsschnitt durch ein Hydraulikfilterelement,
- Fig. 2: einen stark vereinfachten, prinzipiellen Querschnitt des Hydraulikfilterelements während der Herstellung,
- Fig. 3: ein Querschnitt wie in Fig. 2, jedoch nach der Herstellung.

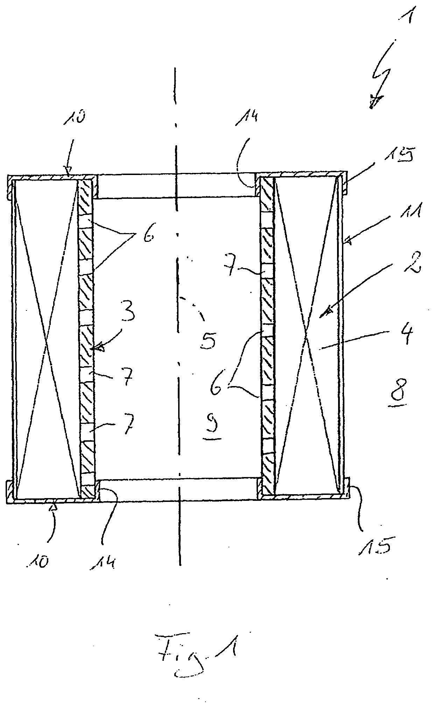

Entsprechend den Fig. 1 bis 3 umfasst ein Hydraulikfilterelement 1, bei dem es sich bevorzugt um ein Ölfilterelement handeln kann, einen zylindrischen Filterkörper 2 sowie eine zylindrische Innenzarge 3. Der Filterkörper 2 ist mit Hilfe eines sternförmig gefalteten Filtermaterials 4 hergestellt. Die Innenzarge 3 ist koaxial zum Filterkörper 2 angeordnet, wobei der Filterkörper 2 die Innenzarge 3 umhüllt. Eine gemeinsame Längsmittelachse ist in Fig. 1 mit 5 bezeichnet. Die Innenzarge 3 ist für das jeweilige Hydraulikmittel, insbesondere Öl, durchlässig ausgestaltet. Sie kann hierzu mit einer Perforation 6 gebildet sein, die aus einer Vielzahl einzelner Durchgangsöffnungen 7 besteht. Der Filterkörper 2 stützt sich radial innen an der Innenzarge 3 ab. Hierdurch kann der Filterkörper 2 im Betrieb relativ großen Druckdifferenzen zwischen einem außenliegenden Rohraum 8 und einem innenliegenden Reinraum 9 ausgesetzt werden.

Im Beispiel ist das Hydraulikfilterelement 1, das im Folgenden auch verkürzt als Filterelement 1 bezeichnet wird, mit zwei Endscheiben 10 ausgestattet, die an gegenüberliegenden axialen Enden des Filterkörpers 2 angeordnet sind. Im Beispiel sind beide Endscheiben 10 baugleich ausgeführt. Bei einer anderen Ausführungsform können sie jedoch auch unterschiedlich gestaltet sein. Zumindest eine der Endscheiben 10 ist zentral offen, um im Einbauzustand des Filterelements 1 eine fluidische Kommunikation mit dem Reinraum 9 zu ermöglichen.

Das hier vorgestellte Filterelement 1 ist außerdem mit einer Hülle 11 ausgestattet, die zylindrisch ausgestaltet ist und die sich ebenfalls koaxial zur Längsmittelachse 5 erstreckt. Die Hülle 11 ist radial außen am Filterkörper 2 angeordnet. Sie ist für das jeweilige Hydraulikmittel durchlässig ausgestaltet. Dabei besitzt die Hülle 11 eine größere Durchlässigkeit, also einen kleineren Durchströmungswiderstand als das Filtermaterial 4 des Filterkörpers 2.

Im Beispiel erstreckt sich die Hülle 11 im Wesentlichen über die gesamte axiale Länge des Filterkörpers 2. Sie umhüllt zumindest die gesamte Außenseite des Filterkörpers 2, die sich zwischen den Endscheiben 10 erstreckt.

Die Hülle 11 liegt bevorzugt unter einer Vorspannung am Filterkörper 2 an. Die Hülle 11 liegt am Filterkörper 2 z.B. mit einer Vorspannung an, die ausreicht, das Filtermaterial 4 spielfrei gegen die Innenzarge 3 anzudrücken. Beim fertigen Filterelement 1 zeigt sich dieses Merkmal darin, dass das Filtermaterial 4 spielfrei an der Innenzarge 3 anliegt.

In der hier gezeigten, bevorzugten Ausführungsform besteht die Hülle 11 aus einem Vliesmaterial. Ein derartiges Vliesmaterial kann beispielsweise aus entsprechenden Kunststoffen, wie zum Beispiel Polyester oder Polyamid, hergestellt sein. Es besitzt eine ausreichende Beständigkeit gegenüber dem jeweiligen Hydraulikmedium und eignet sich in besonderer Weise zur Realisierung einer Vorfilterwirkung. Alternativ ist es ebenso möglich, die Hülle 11 aus einem Material herzustellen, das für das Hydraulikmittel undurchlässig ist. Damit jedoch die gesamte Hülle 11 für das Hydraulikmittel durchlässig ist, besitzt das jeweilige undurchlässige Hüllenmaterial eine Perforation oder Lochung. Dementsprechend kann die Hülle 11 auch aus einem perforierten oder gelochten Hüllenmaterial bestehen.

Besonders vorteilhaft ist eine Ausgestaltung, bei welcher die Hülle 11 aus einem Schrumpfmaterial hergestellt ist bzw. besteht. Das Schrumpfmaterial kann bei entsprechenden Randbedingungen, insbesondere bei einer oberhalb des üblichen Betriebstemperaturbereichs des Hydraulikfilterelements 1 liegenden Schrumpftemperatur seine Abmessungen reduzieren, also schrumpfen. Hierdurch kann eine spielfreie Anlage der Hülle 11 am Filtermaterial 4 und bei entsprechenden Schrumpfkräften auch des Filtermaterials 4 an der Innenzarge 3 realisiert werden.

Erfindungsgemäß ist dabei die Verwendung eines Schrumpfmaterials, das einen richtungsabhängigen Schrumpf aufweist. Unter Schrumpf wird dabei das Schrumpfverhalten, also die Einschrumpfung bei den entsprechenden Randbedingungen, also insbesondere bei der jeweiligen Schrumpftemperatur, verstanden. Dabei ist das Schrumpfmaterial so ausgestaltet, dass es in der Umfangsrichtung des Filterkörpers 2 einen größeren Schrumpf aufweist als in der Axialrichtung des Filterkörpers 2. Beispielsweise kann der Schrumpf in der Umfangsrichtung zumindest dreimal oder wenigstens zehnmal größer sein als in der Axialrichtung. Denkbar ist beispielsweise eine Ausführungsform, bei welcher das Schrumpfmaterial in der Axialrichtung um weniger als 1% schrumpft, während es gleichzeitig in der Umfangsrichtung um mindestens 3 bis 15% schrumpft. Ein richtungsabhängiges Schrumpfverhalten kann z.B. durch eine gezielte Faserorientierung im Schrumpfmaterial realisiert werden.

Durch die Verwendung eines derartigen richtungsabhängig schrumpfenden Materials ist es insbesondere möglich, den Schrumpfvorgang so durchzuführen, dass die Hülle 11 nach dem Schrumpfen sich nach wie vor im Wesentlichen vollständig über die gesamte axiale Länge des Filterkörpers 2 erstreckt, während in der Umfangsrichtung eine vergleichsweise hohe Spannung erzeugt wird, die das Filtermaterial 4 radial nach innen gegen die Innenzarge 3 antreibt.

Die Hülle 11 ist erfindungsgemäß als gewickeltes Bahnenmaterial ausgestaltet. Die in Umfangsrichtung aneinandergrenzenden Enden des Bahnenmaterials sind dann einander überlappend und miteinander verklebt oder verschweißt. Nicht erfindungsgemäß ist eine Ausführungsform, bei welcher die Hülle 11 als Schlauch ausgestaltet ist, so dass sie besonders einfach auf den Filterkörper 2 aufgeschoben werden kann und zusätzliche Befestigungsschritte entfallen können.

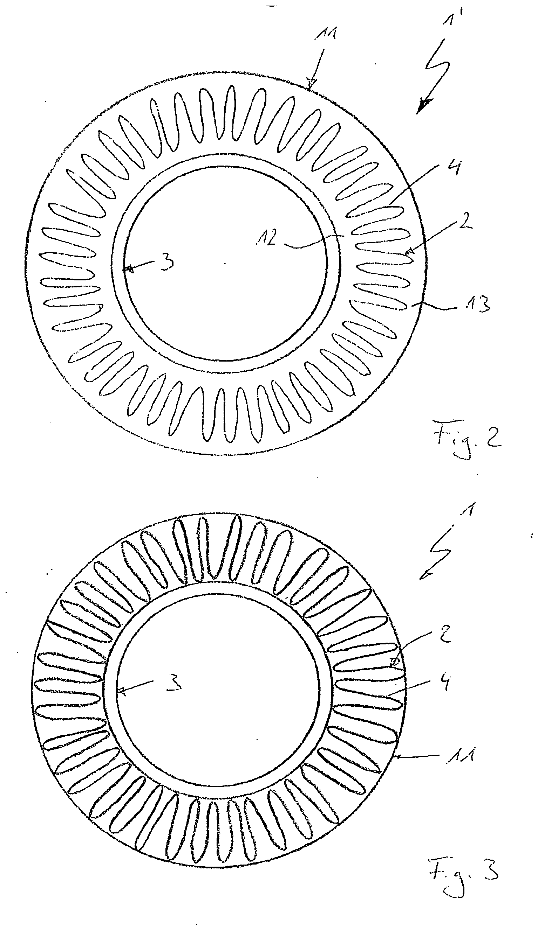

Mit Bezug auf die Fig. 2 und 3 wird im Folgenden ein Verfahren zum Herstellen eines derartigen Hydraulikfilterelements 1 näher erläutert. Fig. 2 zeigt dabei ein fortgeschrittenes Stadium der Herstellung, bei dem die Innenzarge 3, der Filterkörper 2 und die Hülle 11 koaxial zueinander angeordnet sind. Dieser Zwischenzustand des Filterelements 1 wird in Fig. 2 mit 1' bezeichnet. In diesem Zwischenzustand ist es möglich, dass radial zwischen der Innenzarge 3 und dem Filtermaterial 4 ein inneres Radialspiel 12 auftritt. Zusätzlich oder alternativ kann radial zwischen der Hülle 11 und dem Filtermaterial 4 ein äußeres Radialspiel 13 auftreten. Alternativ kann die Hülle 11 auch so angebracht werden, dass sie von Anfang an außen am Filtermaterial 4 anliegt.

Das Aufbringen der Hülle 11 kann dabei so durchgeführt werden, dass sie das Filtermaterial 4 gegen die Innenzarge 3 andrückt. Dies kann besonders einfach dadurch realisiert werden, dass eine schrumpfbare Hülle 11, also eine aus einem Schrumpfmaterial hergestellte Hülle 11 verwendet wird. Bei entsprechenden Randbedingungen kann die Hülle 11 aufgeschrumpft werden. Bevorzugt werden dabei thermische Schrumpfverfahren. Bei einer entsprechenden Schrumpftemperatur zieht sich das Schrumpfmaterial zusammen, das heißt, es schrumpft. In der Folge reduziert sich der Umfang der Hülle 11. Hierdurch wird zunächst das ggfs. Vorhandene äußere Radialspiel 13 eliminiert und die Hülle 11 kommt am Filtermaterial 4 außen zur Anlage. Durch Fortsetzen des Schrumpfvorgangs reduziert die Hülle 11 ihren Umfang weiter, wodurch in der Hülle 11 eine in Umfangsrichtung orientierte Zugspannung erzeugt wird. Diese Zugspannung wird am Filtermaterial 4 nach innen abgestützt, wodurch eine radial nach innen orientierte Druckkraft auf das Filtermaterial 4 eingeleitet wird. Bei einer entsprechenden Auslegung des Schrumpfvorgangs bzw. bei einer entsprechenden Auslegung des Hüllenmaterials und bei einer entsprechenden Dimensionierung der Hülle 11 kann dadurch auch das innere Radialspiel 12 eliminiert werden, so dass das Filtermaterial 4 unmittelbar an der Innenzarge 3 radial zur Anlage kommt.

Sobald nun die Hülle 11 so am Filtermaterial 4 angebracht ist, dass dieses radial innen gegen die Innenzarge 3 angedrückt ist, kann die so aufgefundene Relativlage zwischen Filtermaterial 4 und Innenzarge 3 fixiert werden. Die Fixierung dieser Relativlage kann beispielsweise dadurch erfolgen, dass die Endscheiben 10 montiert werden. Die Endscheiben 10 können beispielsweise mit dem Filtermaterial 4 verklebt werden. Sobald der Klebstoff erstarrt ist, ist die Relativlage zwischen dem Filtermaterial 4 und den Endscheiben 10 fixiert und somit auch gegenüber der Innenzarge 3. Zweckmäßig erfolgt die Verklebung so, dass die Endscheiben 10 gleichzeitig auch an der Innenzarge 3 fixiert werden.

Dementsprechend erfolgt durch das Aufbringen der Hülle 11 eine Vormontage des Filterelements 1, während durch das Anbringen der Endscheiben 10 eine Endmontage des Filterelements 1 erfolgt.

Im Beispiel der Fig. 1 besitzen die Endscheiben 10 jeweils einen Innenkragen 14, der einen nicht näher bezeichneten Innenrand der Endscheibe 10 umschließt und der radial innen die Innenzarge 3 axial überlappt. Außerdem besitzen die Endscheiben 10 im Beispiel der Fig. 1 jeweils einen Außenkragen 15, der einen nicht näher bezeichneten Außenrand der jeweiligen Endscheibe 10 umschließt. Ferner übergreift der jeweilige Außenkragen 15 den Filterkörper 2 und im Beispiel außerdem die Hülle 11 radial außen in axialer Richtung. Je nach Fixierung zwischen Endscheibe 10 und Filterkörper 2 kann somit auch die Hülle 11 an den Endscheiben 10 fixiert, insbesondere verklebt werden.

Die Hülle 11 kann entsprechend einer besonders vorteilhaften Ausführungsform aus einem bedruckbaren Material hergestellt sein, so dass es insbesondere möglich ist, die Hülle 11 als Träger von gedruckter Information zu verwenden. Beispielsweise können Verwendungshinweise, Sicherheitshinweise, Herstellernamen sowie Herstellermarken und dergleichen auf die Hülle 11 aufgedruckt werden.

Die Hülle 11 erleichtert außerdem die Handhabung der Filterelemente 1. Gleichzeitig kann sie einen gewissen Schutz der Filterelemente 1 bzw. des Filtermaterials 4 bieten. Beispielsweise kann das Filtermaterial 4 selbst mehrlagig gestaltet sein. Insbesondere ist eine Konfiguration denkbar, bei welcher das Filtermaterial einen Kern aus Vliesmaterial aufweist und radial außen sowie radial innen mit einem Metallnetz versehen ist. Das Metallnetz führt zu einer intensiven Stabilisierung des Filtermaterials 4, kann jedoch vergleichsweise scharfkantig sein und so während der Handhabung der Filterelemente 1 eine Quelle für Verletzungen darstellen. Durch die Hülle 11 lassen sich die Filterelemente 1 ohne weiteres handhaben, ohne dass eine direkte Kontaktierung mit dem Filtermaterial 4 zu befürchten steht.

## Patentansprüche

1. Hydraulikfilterelement, insbesondere Ölfilterelement,
- mit einem zylindrischen Filterkörper (2) aus einem sternförmig gefalteten Filtermaterial (4),
- mit einer zylindrischen Innenzarge (3), an der sich der Filterkörper (2) radial innen abstützt,
- wobei eine für das jeweilige Hydraulikmittel durchlässige, zylindrische Hülle (11) vorgesehen ist, die radial außen am Filterkörper (2) anliegt,
- wobei die Hülle (11) aus einem Schrumpfmaterial besteht,
**dadurch gekennzeichnet,**
**dass** das Schrumpfmaterial so ausgestaltet ist, dass es in der Umfangsrichtung einen größeren Schrumpf aufweist als in der Axialrichtung, und
**dass** die Hülle (11) als gewickeltes Bahnenmaterial ausgestaltet ist.

2. Hydraulikfilterelement nach Anspruch 1,
**dadurch gekennzeichnet,**
**dass** die Hülle (11) unter Vorspannung am Filterkörper (2) anliegt.

3. Hydraulikfilterelement nach Anspruch 1 oder 2,
**dadurch gekennzeichnet,**
**dass** das Filtermaterial (4) spielfrei an der Innenzarge (3) anliegt.

4. Hydraulikfilterelement nach einem der Ansprüche 1 bis 3,
**dadurch gekennzeichnet,**
**dass** die Hülle (11) aus einem perforierten oder gelochten Hüllenmaterial besteht.

5. Hydraulikfilterelement nach einem der Ansprüche 1 bis 4,
**dadurch gekennzeichnet,**
**dass** die Hülle (11) aus einem Vliesmaterial besteht.

6. Verfahren zum Herstellen eines Hydraulikfilterelements, insbesondere eines Ölfilterelements,
- bei dem außen auf ein sternförmig gefaltetes Filtermaterial (4) eines zylindrisches Filterkörpers (2) eine für das jeweilige Hydraulikmittel durchlässige Hülle (11) aus Schrumpfmaterial aufgeschrumpft wird, derart, dass dadurch das Filtermaterial (4) gegen eine in den Filterkörper (2) eingesetzte Innenzarge (3) angedrückt wird und eine Relativlage zwischen Filtermaterial (4) und Innenzarge (3) hergestellt wird, in der ein Radialspiel (12) zwischen Filterkörper (2) und Innenzarge (3) eliminiert ist,
- bei dem anschließend die Relativlage zwischen Filtermaterial (4) und der Innenzarge (3) fixiert wird,
**dadurch gekennzeichnet,**
**dass** das Schrumpfmaterial so ausgestaltet ist, dass es in der Umfangsrichtung einen größeren Schrumpf aufweist als in der Axialrichtung, und
**dass** die Hülle (11) als gewickeltes Bahnenmaterial ausgestaltet ist.

7. Verfahren nach Anspruch 6,
**dadurch gekennzeichnet,**
**dass** die Hülle (11) thermisch aufgeschrumpft wird.

8. Verfahren nach Anspruch 6 oder 7,
**dadurch gekennzeichnet,**
**dass** die Fixierung der Relativlage zwischen Filtermaterial (4) und Innenzarge (3) dadurch erfolgt, dass an axialen Enden des Filterkörpers (2) je eine Endscheibe (10) angebracht wird.

9. Verfahren nach Anspruch 8,
**dadurch gekennzeichnet,**
**dass** die jeweilige Endscheibe (10) am Filtermaterial (4) und an der Innenzarge (3) befestigt wird.

10. Verfahren nach Anspruch 8 oder 9,
**dadurch gekennzeichnet,**
**dass** die jeweilige Endscheibe (10) mit dem Filterkörper (2) verklebt wird.

11. Verfahren nach einem der Ansprüche 8 bis 10,
**dadurch gekennzeichnet,**
**dass** durch das Aufbringen der Hülle (11) eine Vormontage des Filterelements (1) erfolgt und dass durch das Anbringen der Endscheiben (10) eine Endmontage des Filterelements (1) erfolgt.

## Claims

1. A hydraulic filter element, in particular an oil filter element,
- with a cylindrical filter body (2) made of a filter material (4) that is folded in a star-shaped manner,
- with a cylindrical inner frame (3) on which the filter body (2) is supported radially inwardly,
- wherein a cylindrical sleeve (11) is provided which is permeable for the respective hydraulic agent and rests against the filter body (2) radially on the outside,
- wherein the sleeve (11) is made from a shrinking material,
**characterized in that** the shrinking material is configured in such a manner that it exhibits greater shrinking in the circumferential direction than in the axial direction and that the sleeve (11) is configured as wound web material.

2. The hydraulic filter element according to claim 1, **characterized in that** the sleeve (11) rests against the filter body (2) under prestressing.

3. The hydraulic filter element according to claim 1 or 2, **characterized in that** the filter material (4) rests against the inner frame (3) without play.

4. The hydraulic filter element according to any one of claims 1 to 3, **characterized in that** the sleeve (11) is made from a perforated or punched sleeve material.

5. The hydraulic filter element according to any one of claims 1 to 4, **characterized in that** the sleeve (11) is made from a nonwoven material.

6. A method for manufacturing a hydraulic filter element, in particular an oil filter element,
- wherein a sleeve (11) made from a shrinking material that is permeable for the respective hydraulic agent is shrink-fitted on the outside of a star-shaped folded filter material (4) of a cylindrical filter body (2) in such a manner that thereby the filter material (4) is pressed against an inner frame (3) that is inserted into the filter body (2) and a relative position between filter material (4) and the inner frame (3) is established in which relative position a radial play (12) between the filter body (2) and the inner frame (3) is eliminated,
- wherein subsequently the relative position between the filter material (4) and the inner frame (3) is fixed, **characterized in that** the shrinking material is configured such that it exhibits a shrinking that is greater in the circumferential direction than in the axial direction and that the sleeve (11) is configured as wound web material.

7. The method according to claim 6, **characterized in that** the sleeve (11) is shrunk on thermally.

8. The method according to claim 6 or 7, **characterized in that** fixing the relative position between filter material (4) and inner frame (3) takes place by attaching in each case one end plate (10) on axial ends of the filter body (2).

9. The method according to claim 8, **characterized in that** the respective end plate (10) is secured on the filter material (4) and on the inner frame (3).

10. The method according to claim 8 or 9, **characterized in that** the respective end plate (10) is glued to the filter body (2).

11. The method according to any one of claims 8 to 10, **characterized in that** by mounting the sleeve (11) a preassembly of the filter element (1) is carried out and that by fitting the end plates (10) a final assembly of the filter element (1) is carried out.

## Revendications

1. Élément de filtre hydraulique, notamment élément de filtre à huile,
- comportant un corps de filtre (2) cylindrique en une matière filtrante (4) pliée en forme d'étoile,
- comportant un cadre intérieur (3) cylindrique, sur lequel le corps de filtre (2) s'appuie à l'intérieur en direction radiale,
- dans lequel est prévue une enveloppe (11) cylindrique perméable au produit hydraulique concerné qui est adjacente à l'extérieur en direction radiale du corps de filtre (2),
- dans lequel l'enveloppe (11) est constituée d'une matière rétractable,
**caractérisé en ce que**
la matière rétractable est conçue de sorte à présenter dans la direction périphérique un retrait plus grand que dans la direction axiale et **en ce que** l'enveloppe (11) est conçue sous la forme d'une matière en bande enroulée.

2. Élément de filtre hydraulique selon la revendication 1,
**caractérisé en ce que**
l'enveloppe (11) est adjacente sous précontrainte au corps de filtre (2).

3. Élément de filtre hydraulique selon la revendication 1 ou 2,
**caractérisé en ce que**
la matière filtrante (4) est adjacente sans jeu au cadre intérieur (3).

4. Élément de filtre hydraulique selon l'une quelconque des revendications 1 à 3,
**caractérisé en ce que**
l'enveloppe (11) est constituée d'une matière d'enveloppe perforée ou trouée.

5. Élément de filtre hydraulique selon l'une quelconque des revendications 1 à 4,
**caractérisé en ce que**
l'enveloppe (11) est constituée d'une matière non tissée.

6. Procédé destiné à fabriquer un élément de filtre hydraulique, notamment un élément de filtre à huile,
- lors duquel, à l'extérieur, sur une matière filtrante (4) pliée en forme d'étoile d'un corps filtrant (2) cylindrique, on frette une enveloppe (11) en une matière rétractable, perméable au produit hydraulique concerné, de telle sorte que de ce fait, la matière filtrante (4) soit pressée contre un cadre intérieur (3) inséré dans le corps filtrant (2) et qu'une position relative entre la matière filtrante (4) et le cadre intérieur (3), dans laquelle un jeu radial (12) entre le corps filtrant (2) et le cadre intérieur (3) est éliminé soit établie,
- lors duquel on fixe par la suite la position relative entre la matière filtrante (4) et le cadre intérieur (3),
**caractérisé en ce que**
la matière rétractable est conçue de sorte à présenter dans la direction périphérique un retrait plus grand que dans la direction axiale et
**en ce que** l'enveloppe (11) est conçue sous la forme d'une matière en bande enroulée.

7. Procédé selon la revendication 6,
**caractérisé en ce**
**qu'**on frette thermiquement l'enveloppe (11).

8. Procédé selon la revendication 6 ou 7,
**caractérisé en ce que**
la fixation de la position relative entre la matière filtrante (4) et le cadre intérieur (3) s'effectue **en ce que**, sur les extrémités axiales du corps filtrant (2), on monte chaque fois une rondelle d'extrémité (10).

9. Procédé selon la revendication 8,
**caractérisé en ce**
**qu'**on fixe la rondelle d'extrémité (10) respective sur la matière filtrante (4) et sur le cadre intérieur (3).

10. Procédé selon la revendication 8 ou 9,
**caractérisé en ce**
**qu'**on colle la rondelle d'extrémité (10) respective sur le corps filtrant (12).

11. Procédé selon l'une quelconque des revendications 8 à 10,
**caractérisé en ce que**
par l'application de l'enveloppe (11), il s'effectue un prémontage de l'élément filtrant (1) et **en ce que** par l'application des rondelles d'extrémité (10), il s'effectue un montage final de l'élément filtrant (1).
